# FASCICULE DE BREVET EUROPEEN

(11) **EP 0 453 384 B1**
(45) Date de publication et mention de la délivrance du brevet: **12.07.1995**
(21) Numéro de dépôt: 91460024.2
(22) Date de dépôt: 18.04.1991
(51) Int. Cl.: F22B 1/30, F24F 6/18

(54) **Générateur de vapeur**
Dampferzeuger
Steam generator

(30) Priorité: 18.04.1990 FR 9005099
(43) Date de publication de la demande: 23.10.1991
(73) Titulaire: INDUSTRIELLE DU PONANT SA, 29220 Landerneau (FR)
(72) Inventeur: Alix, Guy-Paul, F-29200 Brest (FR); Kohler, Marc, F-29200 Brest (FR); Tranvoez, Jean-Michel, F-95570 Bouffemont (FR); Manchec, Jean-Marc, Fort Lauderdale, FL 33 308 (US)
(74) Mandataire: Le Guen, Louis François

(56) Documents cités:
- EP-A- 0 069 155
- EP-A- 0 345 190
- DE-A- 3 236 339
- FR-A- 2 365 159
- US-A- 4 382 173
- US-A- 4 675 505
- US-A- 4 705 936
- HEATING AND AIRCONDITIONING. vol. 769, no. 5, mai 1964, LONDON GB pages 381 - 383; Badertscher: "All-automatic Steam Generator for Atmospheric Humidification"

## Description

L'invention concerne un récipient de générateur de vapeur qui est utilisé dans un humidificateur pour un système de conditionnement d'air et, plus particulièrement, pour un système de conditionnement d'air d'aéronefs.

Des humidificateurs pour des systèmes de conditionnement d'air d'aéronefs sont connus et on pourra se reporter, à titre d'exemple, à la demande de brevet EP-A-0 345 190.

Dans cette demande, il est décrit un humidificateur pour système de conditionnement d'air qui comprend une gaine de circulation d'air chaud à humidifier, un générateur de vapeur d'eau dont la sortie est située au sommet d'un cône divergent s'étendant jusqu'à la paroi interne de la gaine, la surface latérale du cône étant pourvue de trous pour laisser passer l'air chaud et pour le mélanger, de manière homogène, à la vapeur d'eau engendrée par le générateur de vapeur.

On connaît les avantages procurés par l'utilisation d'un générateur de vapeur dans un humidificateur et on citera, parmi ceux-ci, le fait de pouvoir utiliser de l'eau contenant des éléments minéraux et, en particulier, l'eau du circuit avion. Citons également le fait qu'il fonctionne sans qu'apparaîsse de la condensation dans la gaine conduisant l'air à la cabine de l'avion.

Un but de l'invention est de prévoir un générateur de vapeur et, en particulier, un récipient utilisable dans un tel humidificateur.

Un récipient dans un tel générateur de vapeur d'un humidificateur d'un système de conditionnement d'air comporte un orifice de sortie de vapeur d'eau alimentant l'humidificateur, un orifice de remplissage d'eau relié à la sortie d'une vanne d'alimentation dont l'entrée est reliée à une source d'alimentation en eau, un orifice de vidange raccordé à l'entrée d'une vanne de vidange et au moins deux électrodes plongeant partiellement dans l'eau qu'il contient, ledit récipient étant associé à une unité de régulation alimentant lesdites électrodes sous une tension constante, mesurant l'intensité du courant dans lesdites électrodes, commandant le maintien de cette intensité à l'intérieur d'une fourchette en contrôlant l'ouverture ou la fermeture de la vanne d'alimentation, et commandant l'ouverture de la vanne de vidange pour provoquer des évacuations partielles d'eau hors du récipient et la suppression de la tension d'alimentation des électrodes, ces opérations étant suivies d'une commande de fermeture de la vanne d'alimentation, puis du rétablissement de la tension d'alimentation des électrodes pour ramener ladite intensité de courant à l'intérieur de la fourchette.

Selon une caractéristique de l'invention, dans le récipient l'orifice de vidange est à un niveau qui est situé un peu au-dessus du fond du récipient de manière à toujours conserver dans le récipient une petite quantité d'eau.

Lorsque le récipient est vidangé, il reste une réserve d'eau qui, une fois mélangée avec l'eau introduite par la vanne de remplissage, de disposer d'un milieu contenant suffisamment de minéraux, donc d'un milieu suffisamment conducteur, pour que le générateur puisse fonctionner. A l'arrêt du générateur, la vidange du récipient est commandée, mais il reste un peu d'eau minéralisée dans cette réserve, ce qui permet un rédémarrage ultérieur.

Selon une exécution préférentielle de l'invention, l'orifice de vidange et l'orifice de remplissage du récipient sont confondus à la base du récipient et matérialisés par un seul tube un peu en saillie au-dessus du fond du récipient. C'est la partie du tube en saillie sur le fond et à l'intérieur du récipient qui forme avec le fond et les parois latérales du récipient, la réserve d'eau permettant les redémarrages.

Selon une autre exécution préférentielle de l'invention, le récipient est monté de manière amovible sur un support qui porte, de plus, l'unité de régulation et les vannes d'alimentation et de vidange, l'unité de régulation commandant également, d'une part, la vanne d'alimentation pour remplir le récipient lorsque celui-ci vient d'être installé sur le support ou vient d'être mis en marche et, d'autre part, la vanne de vidange pour vider le récipient à chaque arrêt du générateur et au moment de son changement.

Ainsi, un humidificateur équipé d'un générateur de vapeur qui présente cette caractéristique est particulièrement sain puisque pas d'eau, ou tout au moins peu d'eau, stagne dans le récipient.

Selon une autre caractéristique de l'invention, le récipient comprend une électrode de détection de niveau dont le bord inférieur est à niveau supérieur au niveau maximum normal de l'eau contenue dans le récipient et auquel est raccordée l'unité de régulation qui, lorsqu'elle détecte un courant sur cette électrode, commande la coupure du courant dans les électrodes et la vanne de vidange pour vider le récipient.

Ainsi, en cas de mauvais fonctionnement du générateur dont le niveau d'eau dans le récipient est anormalement haut, il y a détection de courant dans cette électrode et l'unité de régulation commande son arrêt.

Selon une autre exécution préférentielle de l'invention, le générateur de vapeur est pourvu d'un support mobile en translation suivant l'axe principal du récipient et supportant une partie tubulaire reliée au tube de l'humidificateur et qui vient se raccorder, de manière amovible, sur l'orifice de sortie de vapeur du récipient, et de plots de connexions qui reçoivent les plots de connexion du récipient auxquels sont branchées les électrodes du récipient.

Ainsi, en s'écartant du récipient, le support déconnecte les plots du récipient et débranche l'orifice du récipient, celui-ci pouvant alors être retiré.

Selon une autre exécution préférentielle de l'invention, le récipient est pourvu d'une électrode raccordée à l'unité de régulation, et qui est connectée, à l'intérieur du récipient à une première borne d'un fusible dont l'autre borne est raccordée à une des électrodes principales, l'unité de régulation vérifiant, au moment de l'installation d'un nouveau récipient, si le fusible est conducteur ou pas, l'unité de régulation, dans le premier cas, envoyant dans le fusible un courant suffisamment intense pour le faire fondre et, dans le second cas, interdisant la mise en marche du générateur.

Il est ainsi impossible de monter un récipient qui a déjà été utilisé.

Les caractéristiques de l'invention, apparaîtront plus clairement à la lecture de la description suivante d'un exemple de réalisation, ladite description étant faite en relation avec les dessins joints, parmi lesquels:
la Fig. 1 montre le schéma de principe d'un humidificateur d'air utilisant un générateur de vapeur selon l'invention,
la Fig. 2 montre une vue en coupe d'un générateur de vapeur selon l'invention, ledit générateur étant prêt à fonctionner, et
la Fig. 3 est une vue en coupe d'un générateur de vapeur selon l'invention, le récipient du générateur étant montré incliné et prêt à être retiré.

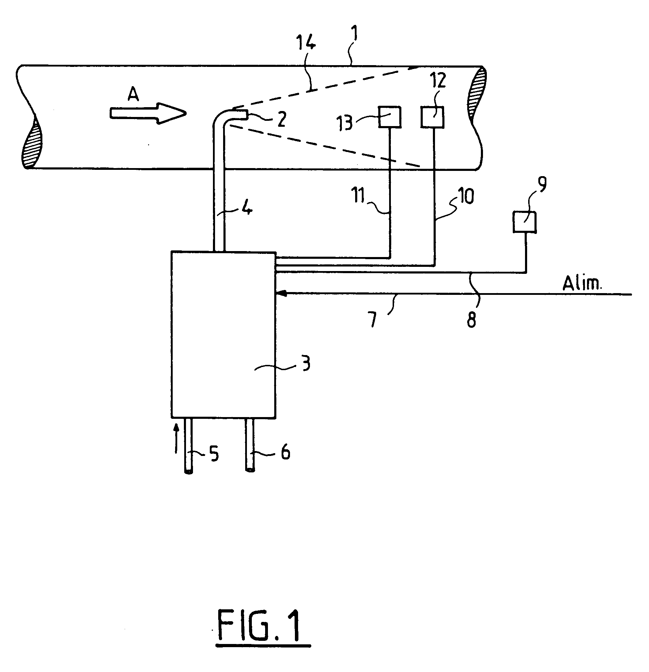

La Fig. 1 montre une gaine de circulation d'air 1 d'un avion, cet air préalablement réchauffé étant à humidifier. Dans la gaine cylindrique 1, est installée, dans l'axe de la gaine, la bouche de sortie 2 d'un générateur de vapeur 3, les moyens de fixation de la bouche 2 n'étant pas montrés. La bouche de sortie 2 est reliée au générateur de vapeur 3 par un tuyau 4 qui passe à travers la paroi de la gaine 1.

Le générateur de vapeur 3 reçoit par une canalisation 5 de l'eau de la source (non représentée) de l'avion, alors que, par la canalisation 6, il est relié à un trop plein (non représenté). Il est relié, par une ligne multifilaire 7, à une alimentation électrique (non représentée). Il est également relié, par un fil 8, à un détecteur d'humidité 9 monté, par exemple, dans le cockpit de l'avion, par des fils 10, 11, respectivement à un détecteur de température 12 et à un détecteur d'humidité 13.

Autour de la bouche de sortie 2, est montée la petite base d'un cône 14 de même axe que l'axe longitudinal de la gaine 1 et dont la grande base est rendue solidaire de la surface interne de la gaine 1, en aval de la bouche 2. La paroi latérale du cône 14 est percée de trous par lesquels passe l'air chaud qui entre ainsi dans le cône 14 (flèche A), le régime d'écoulement de l'air en aval du cône 14 étant turbulent afin d'assurer un mélange homogène de l'air et de la vapeur d'eau émise par la bouche 2.

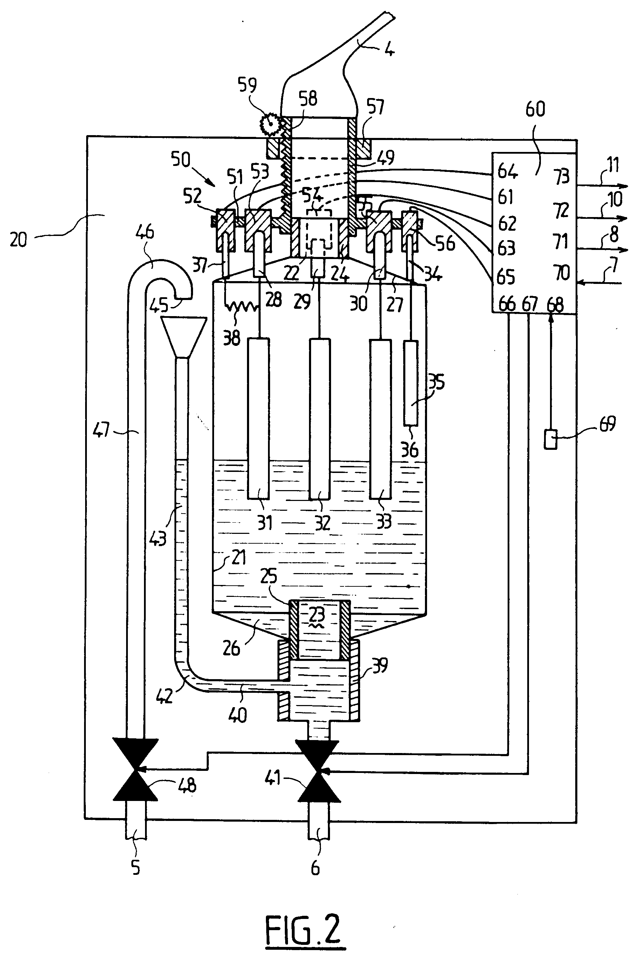

Le générateur de vapeur 3 représenté en détail à la Fig. 2 comprend un support 20 sur lequel est monté un récipient 21 de forme essentiellement cylindrique dont les deux bases sont tronconiques.

Aux extrémités haute et basse du récipient 21, celui-ci comporte respectivement des orifices 22, 23 limités par des tubes axiaux 24, 25. L'extrémité à l'intérieur du récipient 21 du tube 25 est à un niveau supérieur à celui du fond 26 du récipient. En effet, le tube inférieur 25 est en saillie de part et d'autre du fond du récipient 21. Le tube supérieur 24 est en saillie seulement vers l'extérieur du récipient 21. Sur sa paroi supérieure 27, le récipient 21 est pourvu de trois plots 28, 29, 30 équidistants auxquels sont respectivement connectées, à l'intérieur du récipient 21, trois électrodes métalliques 31, 32, 33. Celles-ci sont parallèles à l'axe longitudinal du récipient et sont plongées jusqu'à une certaine profondeur dans l'eau contenue, jusqu'à un certain niveau dans le récipient. Sur la Fig. 2, des lignes en tirets fins, à l'intérieur du récipient 21, représentent l'eau contenue dans le récipient 21. Un quatrième plot 34 également prévu sur la paroi supérieure 27 est connecté à une quatrième électrode métallique 35 parallèle à l'axe longitudinal du récipient 21 et dont le bord inférieur est à un niveau supérieur aux bords inférieurs des électrodes principales 31, 32, 33. Un cinquième plot 37 est prévu sur la paroi supérieure 27 du récipient 21 et est branché, à l'intérieur de celui-ci, à une première borne d'un fusible 38 dont l'autre borne est connectée à une des électrodes 31.

Le tube inférieur 25 est emmanché à une première extrémité d'un tube 39 qui reçoit latéralement une conduite 40, l'autre extrémité du tube 39 étant reliée à l'entrée d'une vanne de vidange 41 à commande électrique. La sortie de la vanne 41 est reliée à la canalisation 6 déjà représentée à la Fig. 1. Elle est montée solidaire du support 20. La conduite 40 présente un coude 42 et une partie linéaire 43 sensiblement parallèle à l'axe longitudinale du récipient 21. Au bout de la partie linéaire 43, est prévu un évasement 44 en regard du bout 45 d'une seconde conduite comprenant un coude 46 et une partie de raccordement 47 à la sortie d'une vanne de remplissage 48 à commande électrique. La vanne 48 a son entrée reliée à la canalisation 5 déjà représentée à la Fig. 1. Le bout libre 45 de la seconde conduite 46, 47 est avantageusement pourvu d'un petit orifice si bien que l'eau qui s'en échappe tombe goutte-à-goutte dans l'évasement 43 de la première conduite 40. Cet arrangement est prévu pour isoler électriquement l'eau contenue dans le récipient 21 de la masse électrique de la vanne 48.

Le tube supérieur 24 du récipient 21 est emmanché sur une partie tubulaire 49 d'un support 50. Celui-ci est constitué d'une plaque 51 solidaire de la partie tubulaire 49 et sur laquelle sont prévus cinq plots femelles 52 à 56 qui viennent respectivement s'adapter sur le plot 37, sur les trois plots mâles 28, 29, 30, et sur le plot mâle 34 du récipient 21. La partie tubulaire 49 est prévue pour coulisser axialement dans une douille 57 solidaire du support 20. Sur une de ses génératrices, la partie tubulaire 49 est pourvue d'une crémaillère 58 s'engrenant avec une roue dentée 59 dont l'axe est monté à rotation sur le support 20. La partie tubulaire 49 reçoit, dans sa partie supérieure, le tuyau 4 déjà représenté à la Fig. 1 et qui relie le générateur de vapeur 3 à l'humidificateur.

Sur le support 20, est également montée une unité de régulation 60 comportant trois sorties 61, 62, 63 respectivement reliées aux trois plots femelles 53, 54, 55 (eux-mêmes branchés aux électrodes 31, 32, 33), une entrée/sortie 64 reliée au plot 52, une entrée 65 à laquelle est relié le quatrième plot 56, deux sorties 66, 67 respectivement reliées aux entrées de commande des vannes 48, 41, une entrée 68 reliée à une sonde de température 69 montée sur le support 20, une entrée multifilaire 70 recevant, par la ligne multifilaire 7 déjà représentée à la Fig. 1, les tensions d'alimentation nécessaires au bon fonctionnement du générateur, et trois entrées 71, 72, 73 respectivement reliées aux lignes 8, 10, 11 déjà représentées à la Fig. 1. Rappelons que ces lignes 8, 10, 11 sont respectivement reliées à un hygromètre 9 monté avantageusement dans le cockpit de l'avion, une sonde de température 12 et une sonde d'humidité 13 montées toutes les deux dans la gaine 1.

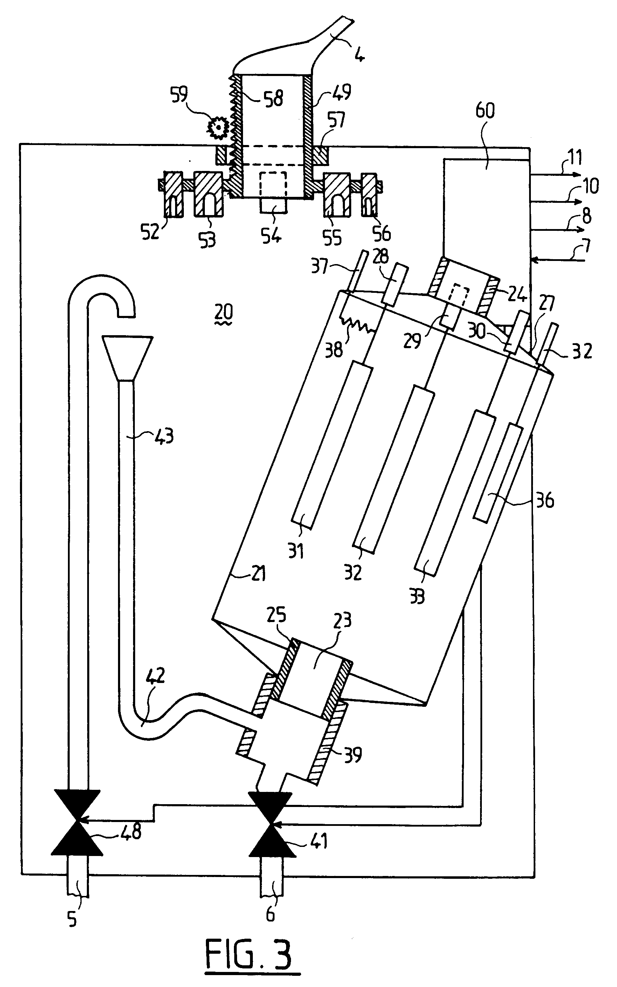

Lorsqu'on fait tourner la roue dentée 59, celle-ci entraîne vers le haut, au moyen de la crémaillère 58, le support 50. Les plots femelles 52 à 56 se désolidarisent des plots mâles 28, 29, 30, 34, 37 du récipient 21 et sa partie tubulaire 49 se dégage du tube supérieur 24 du récipient 21. Comme le montre la Fig. 3, la partie tubulaire 39 peut pivoter d'un certain angle autour d'un axe perpendiculaire au plan du support 20 et entraîner, dans ce mouvement, le récipient 21. Celui-ci peut alors litre extrait si l'on désolidarise son tube inférieur 25 de la partie tubulaire 39.

On notera que sur la Fig. 3, les connexions des plots 52 à 56 à l'unité de régulation 60 ne sont pas représentées pour ne pas alourdir le dessin.

L'unité de régulation 60 est avantageusement pilotée par un microprocesseur, si bien que le fonctionnement du générateur de vapeur de l'invention est lié aux programmes de commande de ce microprocesseur.

Ainsi, l'unité de régulation 60 reçoit les signaux des deux sondes de température 12, 69, d'une sonde d'humidité 13 et d'un hygromètre 9 et commande, en fonction des signaux reçus et de leurs traitements par le microprocesseur, les électrodes 31, 32, 33 et les vannes 41, 48.

Le principe de fonctionnement est le suivant: les trois électrodes 31, 32, 33 sont alimentées en tension alternative triphasée de valeur sensiblement constante et baignent, jusqu'à une certaine profondeur, dans l'eau contenue dans le récipient 21. Celui-ci n'est que partiellement rempli d'eau. La valeur du courant qui circule dans les électrodes 31, 32, 33 est proportionnelle à la hauteur d'eau qui les mouille et à la conductivité de l'eau dans le récipient. Celle-ci augmente avec la concentration en éléments minéraux. L'eau dans le récipient s'échauffe par effet Joule et la quantité d'eau qui s'évapore est directement proportionnelle à la valeur du courant qui circule dans les électrodes 31, 32, 33. La vapeur d'eau générée est extraite du récipient par la conduite 4 et rejoint la petite base du cône 14 dans la gaine 1 pour se mélanger à l'air qui y circule et l'humidifier.

En s'évaporant, le niveau de l'eau dans le récipient 21 s'abaisse et les électrodes 31, 32, 33 baignent dans une profondeur moindre, ce qui a pour effet de diminuer l'intensité du courant qui passe entre elles. En fait, cette diminution du niveau de l'eau s'accompagne d'une augmentation de la concentration de l'eau en éléments minéraux. La baisse de niveau est cependant prépondérant sur l'augmentation de concentration et les électrodes 31, 32, 33 sont alors le siège d'une moindre quantité de vapeur.

Lorsque l'unité de régulation 60 détecte une baisse de l'intensité du courant d'électrodes d'une certaine quantité par rapport à une consigne de courant donnée (quantité, par exemple, de l'ordre de 10%), elle commande l'ouverture de la vanne 48. Le bout 45 de la conduite 46 fournit, goutte-à-goutte, de l'eau dans la conduite 40, ce qui ajoute, par le principe des vases communicants (l'extrémité supérieure de l'évasement 44 étant à niveau plus élevé que le niveau de l'eau dans le récipient), de l'eau dans le récipient 21. Le niveau de l'eau dans celui-ci augmente et l'intensité du courant d'électrodes augmente proportionnellement. Lorsqu'il a atteint une intensité supérieure d'une certaine quantité (par exemple 10%) par rapport à la consigne de courant, l'unité de régulation 60 commande la fermeture de la vanne 48. L'intensité du courant qui circule dans les électrodes 31, 32, 33 reste donc à l'intérieur d'une fourchette de courant centré sur la valeur de la consigne de courant. La quantité de vapeur engendrée, ainsi que, par conséquence, le taux d'humidité dans le cockpit, restent donc sensiblement constants, à l'effet d'hystérésis près introduit par le fonctionnement de l'unité de régulation 60.

L'unité de régulation effectue donc des cycles pendant lesquels on introduit de l'eau dans le récipient pour réajuster les baisses de courant obtenues pendant l'évaporation. A certains moments, qui peuvent être prédéterminés ou au contraire déterminés par l'unité de régulation en fonction de l'historique de la variation du courant d'électrodes, l'unité 60 commande l'ouverture de la vanne 41 pour évacuer une certaine quantité d'eau qui, elle-aussi, est soit prédéterminée soit déterminée par l'unité de régulation elle-même en fonction de cet historique. L'ouverture de la vanne 41 est effectuée simultanément avec la coupure du courant sur les électrodes, ceci afin d'éviter les fuites de courant par l'eau de vidange en aval de la vanne 41. Une fois la vanne 41 fermée, elle commande l'ouverture de la vanne 48 pour l'introduction d'eau dans le récipient. De cette manière, l'augmentation de la concentration en éléments minéraux pendant l'évaporation est compensée, pas à tous les cycles ce qui n'est pas nécessaire, mais à certains moments.

Dans l'unité de régulation 60, la valeur du signal fourni par l'hygromètre 9 est comparée à une valeur de consigne du taux d'humidité et le résultat de cette comparaison sert à l'établissement, dans l'unité de régulation 60 elle-même, de la consigne de courant dans les électrodes. C'est, comme nous l'avons vu précédemment, à partir de cette valeur de consigne de courant que l'unité de régulation 60 maintient le courant entre électrodes dans une certaine fourchette de courant. Si le taux d'humidité dans le cockpit est inférieur à la consigne d'humidité, l'unité de régulation 60 augmente la consigne de courant proportionnellement à l'écart entre ces taux. De même, si le taux est supérieur à la consigne d'humidité, l'unité de régulation 60 établit une consigne de courant d'électrodes diminuée proportionnellement à l'écart des taux.

Les capteurs de température, l'un à proximité du récipient, l'autre dans la gaine, peuvent avoir, selon un fonctionnement simplifié de l'invention (fonctionnement lié aux programmes du microprocesseur de l'unité 60), un rôle de sécurité. Si la température est trop élevée ou si elle varie trop brusquement, le courant dans les électrodes est interrompu.

Au cas où le niveau de l'eau dans le récipient est trop élevé, tel que cela pourait résulter d'un mauvais fonctionnement d'une des vannes, un courant peut circuler entre l'électrode et une des électrodes. C'est l'unité de régulation qui détecte ce courant et qui commande alors l'ouverture de la vanne de vidange et l'arrêt du système.

Comme nous l'avons déjà mentionné, la partie tubulaire est en saillie de part et d'autre du fond du récipient. Le rôle de la partie en saillie à l'intérieur du récipient, est de pouvoir constituer une réserve d'eau chargée en éléments minéraux. Ainsi, en installant un nouveau récipient, on peut le remplir de l'eau potable d'alimentation de l'avion et envoyer le courant dans les trois électrodes qui pourront alors commencer à travailler normalement.

Au moment d'installer un nouveau récipient, l'unité de régulation vérifie l'état conducteur du fusible en injectant, par exemple, par le plot, un courant. Si le fusible est conducteur, l'unité de régulation envoie, dans le fusible, un courant suffisamment intense pour le faire fondre puis elle initialise une horloge et, au bout d'une durée qui est définie comme la durée de vie du récipient, déclenche une alarme (non représentée). Par contre, s'il n'est pas conducteur, cela signifie que l'on a installé un récipient qui a déjà été utilisé et l'unité de régulation le signale, par exemple, par un voyant installé en cabine. Cette fonction a pour but de limiter le colmatage des électrodes 31, 32, 33.

## Revendications

1. Récipient de générateur de vapeur pour humidificateur d'un système de conditionnement d'air comportant un orifice de sortie (22) alimentant l'humidificateur, un orifice de remplissage d'eau (23) raccordé à la sortie d'une vanne d'alimentation (48) dont l'entrée est reliée à une source d'alimentation en eau, un orifice de vidange (23) raccordé à l'entrée d'une vanne de vidange (41) et au moins deux électrodes (31, 32, 33) plongeant partiellement dans l'eau qu'il contient, ledit récipient étant associé à une unité de régulation (60) alimentant lesdites électrodes (31, 32, 33) sous une tension constante, mesurant l'intensité du courant dans lesdites électrodes (31, 32, 33), commandant le maintien de cette intensité à l'intérieur d'une fourchette en contrôlant l'ouverture ou la fermeture de la vanne (48), et commandant l'ouverture de la vanne de vidange (41) pour provoquer des évacuations partielles d'eau hors du récipient et la suppression de la tension d'alimentation des électrodes (31, 32, 33), ces opérations étant suivies d'une commande de fermeture de la vanne de vidange (41), d'une commande d'ouverture de la vanne d'alimentation (48), puis du rétablissement de la tension d'alimentation des électrodes (31, 32 33) pour ramener ladite intensité de courant à l'intérieur de la fourchette, caractérisé en ce que l'orifice de vidange (23) est à un niveau qui est situé un peu au-dessus du fond (26) du récipient (21) de manière à toujours conserver dans le récipient (21) une petite quantité d'eau.

2. Récipient selon la revendication 1, caractérisé en ce que l'orifice de vidange (23) et l'orifice de remplissage (23) sont confondus à la base du récipient et matérialisés par un seul tube (25) un peu en saillie au-dessus du fond (26) du récipient.

3. Récipient selon la revendication 1 ou 2, caractérisé en ce qu'il est monté de manière amovible sur un support (20) qui porte, de plus, l'unité de régulation (60) et les vannes d'alimentation (48) et de vidange (41).

4. Récipient selon une des revendications précédentes 1 à 3, caractérisé en ce qu'il est pourvu d'une électrode (35) de détection de niveau dont le bord inférieur (36) est à un niveau supérieur au niveau maximum normal de l'eau contenue dans le récipient (21) et à laquelle est raccordée l'unité de régulation (60) qui, lorsqu'elle détecte un courant sur cette électrode (35), commande la suppression de la tension d'alimentation des électrodes (31, 32, 33) et la vanne de vidange (41) pour vider le récipient.

5. Récipient selon une des revendications précédentes 1 à 4, caractérisé en ce qu'il est pourvu d'un support (50) mobile en translation suivant l'axe principal du récipient et supportant une partie tubulaire (49) reliée à l'humidificateur et qui vient se raccorder, de manière amovible, sur l'orifice de sortie (24), et de plots de connexion (53, 54, 55) qui reçoivent les plots de connexion (28, 29, 30) auxquels sont branchées les électrodes (31, 32, 33).

6. Récipient selon une des revendications précédentes 1 à 5, caractérisé en ce qu'il est pourvu d'un plot (37) raccordé à l'unité de régulation (60), et qui est connecté, à l'intérieur du récipient à une première borne d'un fusible (38) dont l'autre borne est raccordée à une des électrodes (31, 32, 33), l'unité de régulation (60) vérifiant, au moment de l'installation d'un nouveau récipient, si le fusible (38) est conducteur ou pas, l'unité de régulation (60), dans le premier cas, envoyant dans le fusible (38) un courant suffisamment intense pour le faire fondre et, dans le second cas, interdisant la mise en marche du récipient.

## Claims

1. Steam generator vessel for the humidifier of an air conditioning system containing an outlet (22) supplying the humidifier, a water inlet (23) connected to the outlet of a supply valve (48) the inlet of which is connected to a water supply source, an emptying outlet (23) connected to the inlet of an emptying valve (41) and at least two electrodes (31, 32, 33) partially plunged into the water which the vessel contains, said vessel being combined with a control unit (60) supplying the said electrodes (31, 32, 33) with a constant voltage, measuring the current intensity through the said electrodes (31, 32, 33), controlling the maintenance of this intensity within a range by controlling the opening or closing of the valve (48), and controlling the opening of the emptying valve (41) in order to bring about partial emptying of water from the vessel to the outside and the suppression of the supply voltage to the electrodes (31, 32, 33), these operations being followed by a command for closing the emptying valve (41), a command for opening the supply valve (48), then re-establishing the supply voltage to the electrodes (31, 32, 33) to return the said current intensity to within the range, characterized in that the emptying outlet (23) is at a level which is situated a little above the bottom (26) of the vessel (21) so as always to retain a small quantity of water in the vessel (21).

2. Vessel according to claim 1, characterized in that the emptying outlet (23) and the inlet (23) are combined in the base of the vessel and comprise a single tube (25) which projects slightly above the bottom (26) of the vessel.

3. Vessel according to claim 1 or 2, characterized in that it is mounted in a removable manner on a support (20) which carries, in addition, the control unit (60) and the supply (48) and emptying (41) valves.

4. Vessel according to one of the preceding claims 1 to 3, characterized in that it is provided with a level detection electrode (35) the lower edge (36) of which is at a higher level than the normal maximum level of the water contained in the vessel (21) and to which the control unit (60) is connected which, when it detects a current in this electrode (35), controls the suppression of the voltage supply to the electrodes (31, 32, 33) and the emptying valve (41) in order to empty the vessel.

5. Vessel according to one of the preceding claims 1 to 4, characterized in that it is provided with a support (50) which is movable by displacement along the principal axis of the vessel and supporting a tubular part (49) connected to the humidifier and which makes a connection, in a removable manner, with an outlet (24), and contacts (53, 54, 55) which engage the contacts (28, 29, 30) to which the electrodes (31, 32, 33) are connected.

6. Vessel according to one of the preceding claims 1 to 5, characterized in that it is provided with a contact (37) connected to the control unit (60), and which is connected inside the vessel to a first terminal of a fuse (38) the other terminal of which is connected to one of the electrodes (31, 32, 33), the control unit (60) verifying, at the time of installation of a new vessel, whether the fuse (38) is a conductor or not, the control unit (60), in the first case, sending a current through the fuse (38) which is sufficiently strong to blow it and, in the second case, preventing the operation of the vessel.

## Patentansprüche

1. Behälter für Dampferzeuger für Luftbefeuchter von Klimaanlagen, umfassend eine Austrittsöffnung (22) zur Versorgung des Luftbefeuchters, eine Wassereinfüllöffnung (23), die mit dem Austritt eines Versorgungsventils (48) verbunden ist, dessen Einlauf mit einer Wasserversorgungsquelle verbunden ist, eine Ablaßöffnung (23), die mit dem Einlauf eines Ablaßventils (41) verbunden ist, und mindestens zwei Elektroden (31, 32, 33), die teilweise in das Wasser tauchen, das er enthält, wobei der genannte Behälter mit einer Regeleinheit (60) verbunden ist, die die Elektroden (31, 32, 33) bei einer konstanten Spannung mit Strom versorgt, die Stromstärke in den Elektroden (31, 32, 33) mißt, die Aufrechterhaltung dieser Stärke innerhalb einer Spanne regelt, indem sie die Öffnung oder Schließung des Ventils (48) steuert, und die Öffnung des Ablaßventils (41) steuert, um einen Teil des Wassers aus dem Behälter abzulassen, und die Unterdrückung der Versorgungsspannung der Elektroden (31, 32, 33) veranlaßt, wobei auf diese Vorgänge ein Befehl zur Schließung des Ablaßventils (41), ein Befehl zur Öffnung des Versorgungsventils (48) und dann zur Wiederherstellung der Versorgungsspannung der Elektroden (31, 32, 33) folgt, um die genannte Stromstärke wieder auf einen Wert in der Spanne zu bringen, dadurch gekennzeichnet, daß sich die Ablaßöffnung (23) an einer Stelle befindet, die sich etwas oberhalb des Bodens (26) des Behälters (21) befindet, um im Behälter (21) immer eine geringe Wassermenge zu behalten.

2. Behälter nach Patentanspruch 1, dadurch gekennzeichnet, daß die Ablaßöffnung (23) und die Einfüllöffnung (23) im unteren Teil des Behälters zusammenfallen und aus einem einzigen Rohr (25) bestehen, das ein wenig aus dem Boden (26) des Behälters hervorragt.

3. Behälter nach Patentanspruch 1 oder 2, dadurch gekennzeichnet, daß er abnehmbar auf einen Träger (20) montiert ist, der außerdem die Regeleinheit (60) und die Versorgungs- (48) und Ablaßventile (41) trägt.

4. Behälter nach einem der vorangehenden Patentansprüche 1 bis 3, dadurch gekennzeichnet, daß er mit einer Elektrode (35) zur Feststellung des Wasserstandes versehen ist, deren unterer Rand (36) sich in einer Höhe befindet, die über dem normalen Maximalwasserstand des Behälters (21) liegt und mit der die Regeleinheit (60) verbunden ist, die die Unterdrückung der Versorgungsspannung der Elektroden (31, 32, 33) und das Ablaßventil (41) zur Leerung des Behälters veranlaßt, wenn sie in dieser Elektrode (35) einen Strom feststellt.

5. Behälter nach einem der vorangehenden Patentansprüche 1 bis 4, dadurch gekennzeichnet, daß er mit einem Träger (50) versehen ist, der längs der Hauptachse des Behälters verschiebbar ist und einen röhrenförmigen Teil (49) trägt, der mit dem Luftbefeuchter verbunden ist und sich lösbar mit der Austrittsöffnung (24) verbindet, und Anschlußsteckstellen (53, 54, 55), die die Anschlußsteckstellen (28, 29, 30) aufnehmen, an die die Elektroden (31, 32, 33) angeschlossen sind.

6. Behälter nach einem der vorangehenden Patentansprüche 1 bis 5, dadurch gekennzeichnet, daß er mit einer Steckstelle (37) versehen ist, die mit der Regeleinheit (60) verbunden ist und die im Inneren des Behälters mit einem ersten Anschluß einer Sicherung (38) verbunden ist, deren anderer Anschluß mit einer der Elektroden (31, 32, 33) verbunden ist, wobei die Regeleinheit (60) zum Zeitpunkt der Installation eines neuen Behälters feststellt, ob die Sicherung (38) leitfähig ist oder nicht, wobei die Regeleinheit (60) im ersten Fall einen ausreichend starken Strom in die Sicherung (38) sendet, um sie zu schmelzen, und im zweiten Fall die Inbetriebnahme des Behälters verhindert.
